# EUROPÄISCHE PATENTANMELDUNG

(11) **EP 1 395 023 A1**
(43) Veröffentlichungstag der Anmeldung: **03.03.2004**
(21) Anmeldenummer: 03019500.2
(22) Anmeldetag: 28.08.2003
(51) Int. Cl.: H04M 3/00, H04M 3/22, H04B 3/23

(54) **Verfahren und Anordnung zur Sprachübertragung über ein Telekommunikationsnetz**

(30) Priorität: 29.08.2002 DE 10239803
(71) Anmelder: Tenovis GmbH & Co. KG, 60326 Frankfurt (DE)
(72) Erfinder: Brandt, Hubertus, 64839 Münster (DE); Pomy, Joachim, 64625 Bensheim (DE)
(74) Vertreter: Heinze, Ekkehard, Dipl.-Phys. Dr.

(57) **Zusammenfassung**

Verfahren zur Sprachübertragung auf einer Signalstrecke zwischen einem Mikrofon eines ersten Telekommunikations-Endgerätes und einer Sprachwiedergabe- oder Sprachaufzeichnungseinrichtung eines mit dem ersten Telekommunikations-Endgerät über ein Telekommunikationsnetz mit einer Vermittlungseinrichtung verbundenen zweiten Telekommunikations-Endgerätes, wobei in der Signalstrecke nichtintrusiv mindestens einer der Parameter
- Laufzeit des Sprachsignals,
- Echodämpfung,
- Signal-Geräusch-Abstand oder Signal-Rausch-Abstand,
- Pegel des Sprachsignals,
- Pegel und Art eines Hintergrundgeräusches,
- Klarheit des Sprachsignals und
- Typ einer Sprachsignal-Komprimierung
   gemessen und gemäß einem vorbestimmten Auswertungsalgorithmus in Echtzeit oder Quasi-Echtzeit ausgewertet und in Abhängigkeit vom Auswertungsergebnis eine Einrichtung zur Beeinflussung der Sprachqualität in die Signalstrecke eingeschaltet oder nicht eingeschaltet wird.

## Beschreibung

Die Erfindung betrifft ein Verfahren zur Sprachübertragung über ein Telekommunikationsnetz nach dem Oberbegriff des Anspruchs 1 sowie eine zur Durchführung dieses Verfahrens geeignete Anordnung.

Die Telekommunikationsnetze müssen in Folge der Bereitstellung und zunehmenden Verbreitung der verschiedensten Dienste und ihrer - seit Jahren dramatisch anwachsenden - Nutzung zur Übertragung riesiger Datenmengen in stark zunehmenden Maße verschiedensten Anforderungen gerecht werden, die teilweise höchst widersprüchlich sind. In diesem Kontext ist auch der Anspruch der Nutzer an eine unter allen Bedingungen hohe Sprachqualität gestiegen.

Es ist daher bekannt, in Telekommunikationsnetzen verschiedene Einrichtungen einzusetzen, die auch unter ungünstigen Übertragungsbedingungen eine hohe Qualität der Sprachübertragung sichern Hierzu zählen Echokompensatoren, automatische Pegelsteuerungen (ALC - Automatic Level Control), unterschiedliche Sprachverbesserungs-Einrichtungen (zusammenfassend bezeichnend als VED - Voice Enhancement Devices) oder Mittel zur Erzeugung eines als angenehm empfundenen Hintergrundgeräusches (CNG - Comfort Noise Generators). Wie bereits aus den Bezeichnungen dieser verschiedenen Mittel zur Verbesserung der Sprachqualität deutlich wird, zielen diese auf eine Qualitätserhöhung unter verschiedenen Gesichtspunkten. Sie können, je nach technischer Ausstattung einer konkreten Netzkonfiguration, einzeln oder auch in Kombination miteinander zum Einsatz kommen.

Der Einsatz dieser Einrichtungen zur Verbesserung der Ende-Zu-Ende-Sprachübertragungsqualität erfolgt bisher aufgrund einer vorhergehenden übertragungstechnischen Planung. Die Einrichtungen werden also entweder bei jeder Verbindung einer bestimmten Kommunikationskomponente oder auch in Abhängigkeit von Routing-Informationen verbindungsspezifisch eingesetzt.

Diese Art des Einsatzes - entweder gänzlich unbedingt oder routing-bezogenführt vielfach nicht zum gewünschten Ergebnis. Insbesondere dann, wenn konkrete Verbindungen aufgrund der Parameter der Übertragungsstrecke bereits ohne Einsatz jeglicher Mittel zur Verbesserung der Sprachqualität eine ausreichende Sprachqualität haben, wird mit den erwähnten Einrichtungen häufig der gegenteilige Effekt erreicht, nämlich eine Verschlechterung der Sprachqualität. Nachteilig beim bisherigen Einsatz der erwähnten Einrichtungen ist zudem, dass im Rahmen der Übertragungsplanungen häufig eine viel zu große Anzahl von ihnen vorgesehen wird, um auch unter besonders ungünstigen physikalischen Übertragungsbedingungen - die aber dann häufig gar nicht auftreten - eine den Anforderungen entsprechende Sprachqualität garantieren zu können.

Es ist im übrigen bekannt, an Telekommunikationsnetzen seitens der Netzbetreiber oder von Dienstanbietern Messungen zur Erfassung der Sprachqualität vorzunehmen. Sofern diese ohne Beeinträchtigung eines übertragenen Sprach-Nutzsignals erfolgen, bezeichnet man sie üblicherweise als "nicht-intrusiv" (engl.: non-intrusive), und zwar teilweise gemäß der ITU-T Recommendation P. 561.

Der Erfindung liegt die Aufgabe zugrunde ein Verfahren sowie eine Anordnung zur Gewährleistung einer anforderungsgerechten Sprachqualität in TK-Netzen anzugeben, mit denen nachteilige Einflüsse von Einrichtungen zur Verbesserung der Sprachqualität vermieden werden und die eine optimierte Auslegung der entsprechenden Netzkonfigurationen erlauben.

Dieser Aufgabe wird in ihrem Verfahrensaspekt durch ein Verfahren mit den Merkmalen des Anspruchs 1 und in ihrem Anordnungsaspekt durch eine Anordnung mit den Merkmalen des Anspruchs 8 gelöst.

Die Erfindung schließt den wesentlichen Gedanken ein, nicht-intrusiv ausgeführter Messungen zur Erfassung der Sprachqualität im Betriebszustand eines TK-Netzes zur Gewinnung eines Steuersignals zu nutzen, mit dem mindestens einer in der Übertragungsstrecke zwischen zwei TK-Endgeräten vorgesehene Einrichtung zur Beeinflussung (Verbesserung) der Sprachqualität wahlweise in den Ein- oder -Auszustand gebracht wird. Wesentlich ist dabei, dass dieses Einschleifen von Einrichtungen der oben erwähnten Art in eine Übertragungsstrecke insbesondere nicht aufgrund einer Vorab-Ausmessung der Übertragungsstrecke mit speziellen Messsignalen und auch nicht routing-abhängig erfolgt, sondern in Abhängigkeit vom tatsächlichen, aktuellen Qualitätsstandard der Ende-zu-Ende-Sprachübertragung. (Diese bekannten Messungen werden mit kommerziellen Messgeräten ausgeführt, die in einer Vielzahl von Typen marktüblich sind und die jeweils mit dem zu messenden TK-System nicht dauerhaft in Verbindung stehen.)

Mit der vorgeschlagenen Lösung wird, insgesamt gesehen, beim Betrieb von TK-Netzen mit Einrichtungen zur Verbesserung der Sprachqualität ein deutlicher Qualitätsgewinn erzielt, weil die in der derzeitigen Praxis relativ häufigen Fälle von Verschlechterungen einer an sich guten Sprachqualität durch derartige Einrichtungen ausgeschlossen werden können. Zudem ermöglicht die Lösung eine optimale Nutzung der in einer Netzkonfiguration vorhandenen Sprachverbesserungs-Ressourcen, so dass bei der Planung neuer Konfigurationen die Anzahl der vorgesehenen Einrichtungen zur Verbesserung der Sprachqualität verringert werden kann. Dies erbringt natürlich Kosteneinsparungen.

Erfindungsgemäß wird zur Erfassung der aktuellen Sprachqualität die Laufzeit des Sprachsignals, die Echodämpfung, der Signal-Geräusch-Abstand oder Signal-Rausch-Abstand, der Pegel des Sprachsignals, Pegel und Art eines Hintergrundgeräusches, die Klarheit des Sprachsignals und/oder der Typ einer im Netz eingesetzten Sprachsignal-Komprimierung nicht-intrusiv gemessen. Bei den in Abhängigkeit von einer Auswertung der Messung ein- oder ausgeschalteten Einrichtungen handelt es sich insbesondere um Echokompensatoren, VEDs, ALCs, Rauschverminderungssysteme (NRS) oder auch die - ebenfalls bereits weiter oben erwähnten-CNGs. Anhand des Ergebnisses der nicht-intrusiven Sprachqualitätsmessung werden eine oder mehrere derartige Einrichtungen eingeschaltet bleiben können oder abgeschaltet werden (wenn sie vorher eingeschaltet waren) oder abgeschaltet bleiben können oder angeschaltet werden (wenn sie vorher abgeschaltet waren).

Die erfindungsgemäße Ansteuerung der erwähnten Einrichtungen erfolgt insbesondere in Abhängigkeit davon, ob einer oder mehrere der erwähnten Parameter einen vorbestimmten Schwell- bzw. Grenzwert in den nachfolgenden Wertebereichen erreichen: Laufzeit des Sprachsignals: 0 bis 400 ms (Einweg; für "roundtrip" gilt der doppelte Wert), insbesondere 50 bis 100 ms; Echodämpfung: 6 bis 40 dB, insbesondere 25 bis 40 dB; Signal-Geräusch-Abstand: 6 bis 38 dB; Pegel des Sprachsignals: + 3... - 50 dBm0; Pegel des Hintergrundgeräusches; - 80... - 60 dBm0. Die erfindungsgemäße Ansteuerung ist auch in Abhängigkeit von einer bestimmten Art eines Hintergrundgeräusches, beispielsweise eines weißen oder rosa Rauschens oder einer ereignisbezogenen Einstufung, möglich. Für die Klarheit des Sprachsignals als Messgröße ist ein Indexwert vorgebbar, beispielsweise ein Wert auf einer von 1 bis 5 reichenden Skala. Arten von Sprachsignalkomprimierung, in deren Abhängigkeit ein Ein- oder aber Aus-Zustand einer der erwähnten Einrichtungen einstellbar ist, sind zum Beispiel 8 kbit/s nach ITU-T Rec. G. 729 oder auch 6,3 kbit/s oder 5,3 kbit/s nach ITU-T Rec. G. 723.1.

In einer bevorzugten Ausführung der Erfindung wird die Messung und Auswertung des Parameters oder der Parameter unmittelbar nach Aufbau einer Verbindung anhand der ersten übertragenen Nutz-Sprachsignale ausgeführt. In einer speziellen Fortbildung dieser Ausführung wird die Messung und Auswertung des Parameters oder der Parameter während des Bestehens einer Verbindung in vorbestimmten Zeitabständen wiederholt und der Schaltzustand der Entwicklung zur Beeinflussung der Sprachqualität in Abhängigkeit vom Auswertungsergebnis wahlweise geändert.

Eine aus derzeitiger Sicht besonders vorteilhafte Ausführungsform sieht vor, dass die beiden Parameter Laufzeit des Sprachsignals und Echodämpfung gemessen und aufgrund eines beide Parameter berücksichtigenden Auswertungsalgorithmus ausgewertet werden und als Einrichtung zur Beeinflussung der Sprachqualität ein Echokompensator eingesetzt wird. Hierbei ist bei einer Signallaufzeit im einfachen Signalweg im Bereich von 20 ms bis 400 ms, insbesondere 50 ms bis 100 ms, der Echokompensator nur dann eingeschaltet, wenn die Echodämpfung einen Wert unterschreitet, der im Bereich zwischen 6 dB und 40 dB, insbesondere 25 dB und 40 dB, vorprogrammiert ist.

Die Berücksichtigung der beiden Parameter kann speziell in Form einer Kurvendarstellung der Echodämpfung in Abhängigkeit von der Signallaufzeit (delay) erfolgen, wobei Echodämpfungs-Signallaufzeit-Punkte in der XY-Ebene, die oberhalb der vorbestimmten Kurve liegen, zum Bewirken des Ein-Zustandes des Echokompensators führen, während unterhalb der Kurve liegende Punkte die Aktivierung des Aus-Zustandes bewirken. In einer Fortbildung dieser Variante wird neben den Parametern Laufzeit des Sprachsignals und Echodämpfung mindestens einer der Parameter Signal-Geräusch-Abstand oder Signal-Rausch-Abstand, Pegel des Sprachsignals, Pegel und Art eines Untergrundgeräusches, Klarheit des Sprachsignals und Typ einer Sprachsignal-Komprimierung gemessen und ausgewertet.

Allgemein weist der vorbestimmte Auswertungsalgorithmus mindestens eine Entscheidungsmatrix mit Schaltzuständen der Entwicklung zur Beeinflussung der Sprachqualität in Zuordnung zu Werten des Parameters oder der Parameter auf.

In Entsprechung zu den oben erwähnten Verfahrensaspekten stehen Anordnungsaspekte der Erfindung - insbesondere das Vorsehen einer Messeinrichtung für die erwähnten Parameter, einer eingangsseitig mit der Messeinrichtung verbundenen Auswertungseinrichtung sowie einer wiederum eingangsseitig mit der Auswertungseinrichtung verbundenen Schalteinrichtung zum Ein- oder Ausschalten der Einrichtung oder Einrichtungen zur Verbesserung der Sprachqualität in Abhängigkeit vom Ausgangssignal der Auswertungseinrichtung.

Bevorzugt ist weiterhin eine Steuereinrichtung zur Steuerung der Messeinrichtung/Messeinrichtungen, der Auswertungs- und der Schalteinrichtung im Ansprechen auf einen Verbindungsaufbau zwischen dem ersten und zweiten Telekommunikations-Endgerät vorgesehen. Weiter bevorzugt hat die Steuereinrichtung einen Zeitgeber zur periodischen Aktivierung der Messeinrichtung/Messeinrichtungen, der Auswertungs- und der Schalteinrichtung in vorbestimmten Zeitabständen nach einem Verbindungsaufbau.

In der oben bereits als bevorzugt erwähnten Ausführung der Erfindung, bei der als Einrichtung zur Verbesserung der Sprachqualität ein Echokompensator vorgesehen ist, sind als Messeinrichtungen eine Laufzeit-Messeinrichtung zur Messung der Laufzeit des Sprachsignals und eine Echodämpfungs-Messeinrichtung zur Messung der Echodämpfung vorgesehen und in der Auswertungseinrichtung oder der Datenbasis ist ein Auswertungsalgorithmus zur zusammenhängenden Auswertung der Laufzeit und Echodämpfung implementiert. Speziell kann hier zusätzlich mindestens eine (als solche bekannte) weitere Messeinrichtung zur Messung mindestens eines der Parameter Signal-Geräusch-Abstand oder Signal-Rausch-Abstand, Pegel des Sprachsignals, Pegel und Art eines Untergrundgeräusches, Klarheit des Sprachsignals und Typ einer Sprachsignal-Komprimierung vorgesehen und in der Auswertungseinrichtung oder Datenbasis ein auch den oder die zusätzlichen Parameter berücksichtigender Auswertungsalgorithmus implementiert sein.

Anders als bisherige, externe Messeinrichtungen sind Messeinrichtungen zur Erfassung der Sprachqualität, die in Verbindung mit der Erfindung eingesetzt werden, permanent im TK-Netz implementiert und insbesondere als im wesentlichen auf einem digitalen Signalprozessor (DSP) implementierte Sprachdaten-Verarbeitungsalgorithmen ausgebildet.

Die erfindungsgemäße Anordnung kann sowohl in einer ansonsten herkömmlichen TK-Anlage, insbesondere automatischen Nebenstellenanlage (PABX), als auch in einem VoIP Gateway zur Internet-Telefonie realisiert sein.

Vorteile und Zweckmäßigkeiten der Erfindung ergeben sich im übrigen aus der nachfolgenden kurzen Darstellung eines bevorzugten Ausführungsbeispiels anhand der Figuren. Von diesen zeigen:
- Fig. 1: ein Funktions-Blockschaltbild eine Ausführungsform der erfindungsgemäßen Anordnung und
- Fig. 2: eine graphische Darstellung zur Verdeutlichung der Handhabung von Sprachqualitäts-Messergebnissen bei dieser Anordnung.

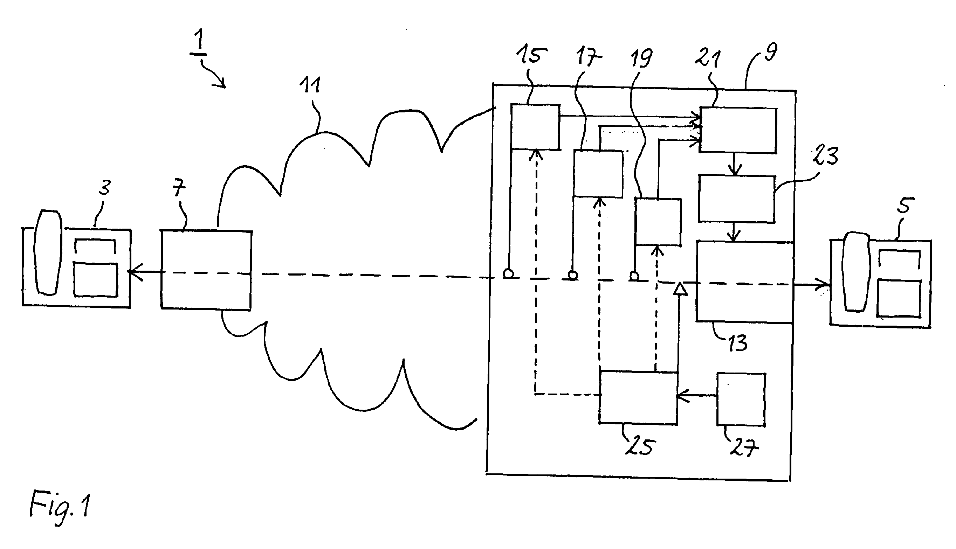

Fig. 1 zeigt skizzenartig eine TK-Anordnung 1 aus einem ersten und zweiten Festnetztelefon 3,5, die über eine erste und zweite Vermittlungsstelle 7,9 eines TK-Netzes 11 miteinander verbunden sind, wobei in der Verbindung - hierbei der zweiten Vermittlungsstelle 9 - ein Echokompensator 13 als Einrichtung zur Verbesserung der Sprachqualität vorgesehen ist.

Im Bereich der Vermittlungsstelle 9 sind - weitgehend in Software realisiert - eine Laufzeit-Messeinrichtung 15 zur Laufzeitmessung eines zwischen den Telefonen 3,5 übertragenen Sprachsignals, eine Echodämpfungs-Messeinrichtung 17 zur Erfassung der Echodämpfung auf dieser Sprachübertragungsstrecke sowie eine bedarfsweise auszugestaltende weitere Messeinrichtung 19 zur Erfassung eines weiteren Übertragungsparameters implementiert. Die Ausgangsignale der Messeinrichtungen 15 bis 19 gelangen zu Eingängen einer Auswertungseinrichtung 21, in der ein Auswertungsalgorithmus zur zusammenfassenden Auswertung der Messsignale gespeichert ist und auf die Messsignale angewandt wird. Die Auswertungseinrichtung 21 ist ausgangsseitig mit einer Schalteinrichtung 23 zum wahlweißen Ein- oder Ausschalten des Echokompensators 13 in Abhängigkeit vom Auswertungsergebnis verbunden.

Eine Steuereinrichtung 25, welche über einen Eingang die Verbindung zwischen den Telefonen 3,5 abfühlt und einen Verbindungsaufbau erfasst, dient zur Aktivierung der Messeinrichtungen 15 bis 19 über entsprechende (in der Fig. kurzgestrichelt gezeichnete) Steuersignale sowie auch der Auswertungseinrichtung 21 und Schalteinrichtung 23 (wo diese Steuersignale im Interesse einer besseren Übersichtlichkeit der Darstellung fortgelassen sind). Der Steuereinrichtung 25 ist auch ein Zeitgeber 27 zugeordnet, der eine bei Verbindungsaufbau aktivierte Zeitmessung ausführt und dessen Zeitsignale eine periodische Aktivierung der Messeinrichtungen, Auswertungseinrichtung und Schalteinrichtung während des bestehens der Verbindung zur Wiederholung der Messungen der relevanten Übertragungsparameter bewirken.

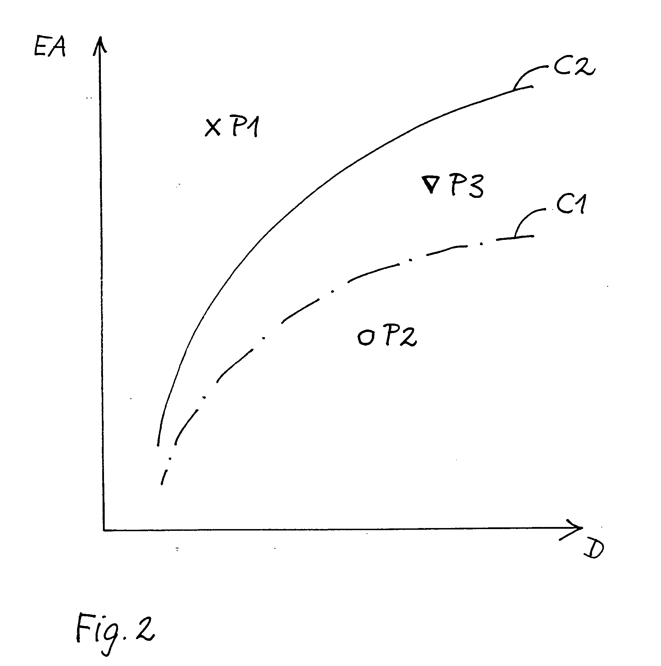

Fig. 2 zeigt in einer schematischen Darstellung zwei Kurven C1, C2 der Echodämpfung EA in Abhängigkeit von der Laufzeit D eines Sprachsignals auf der Übertragungsstrecke zwischen den Telefonen 3 und 5 in Fig. 1, die in der Auswertungseinrichtung 21 vorprogrammiert sein können und in Abhängigkeit von einem Messsignal der weiteren Messeinrichtung 19 zur Auswertung der Messsignale der Laufzeit-Messeinrichtung 15 und Echodämpfungs-Messeinrichtung 17 herangezogen werden. Mit P1, P2 und P3 sind drei Messwertpaare (Echodämpfung, Laufzeit) beispielhaft bezeichnet, die sich bei nich-intrusiven Messungen der Messeinrichtungen 15, 17 ergeben können. Während das Messwertpaar P1 bei beiden vorgespeicherten Kurven C1, C2 eine Aktivierung bzw. ein Aktiviert-Bleiben des Echokompensators zur Folge hat, hat das Messwertpaar P2 bei beiden Kurven eine Deaktivierung bzw. ein Ausgeschaltet-Bleiben des Echokompensators zur Folge. Beim Messwertpaar P3 wird der Echokompensator aktiv geschaltet bzw. gehalten, sofern im Rahmen des Auswertungsalgorithmus die Kurve C1 zur Anwendung kommt, wogegen bei Anwendung der Kurve C2 der Echokompensator inaktiv geschaltet bzw. gehalten wird.

Die Ausführung der Erfindung ist nicht auf dieses Beispiel beschränkt, sondern ebenso in einer Vielzahl von Abwandlungen möglich, die im Rahmen fachgemäßen Handelns liegen.

### Bezugszeichenliste

- 1: TK-Anordnung
- 3, 5: Festnetztelefon
- 7, 9: Vermittlungsstelle
- 11: TK-Netz
- 13: Echokompensator
- 15: Laufzeit-Messeinrichtung
- 17: Echodämpfungs-Messeinrichtung
- 19: weitere Messeinrichtung
- 21: Auswertungseinrichtung
- 23: Schalteinrichtung
- 25: Steuereinrichtung
- 27: Zeitgeber
- D: Laufzeit
- C1 ,C2: programmierte Kurven
- EA: Echodämpfung
- P1, P2, P3: Messwertpaar

## Patentansprüche

1. Verfahren zur-Sprachübertragung auf einer Signalstrecke zwischen einem Mikrofon eines ersten Telekommunikations-Endgerätes und einer Sprachwiedergabe- oder Sprachaufzeichnungseinrichtung eines mit dem ersten Telekommunikations-Endgerät über ein Telekommunikationsnetz mit einer Vermittlungseinrichtung verbundenen zweiten Telekommunikations-Endgerätes,
**dadurch gekennzeichnet,dass**
in der Signalstrecke nicht-intrusiv mindestens einer der Parameter
- Laufzeit des Sprachsignals,
- Echodämpfung,
- Signal-Geräusch-Abstand oder Signal-Rausch-Abstand,
- Pegel des Sprachsignals,
- Pegel und Art eines Hintergrundgeräusches,
- Klarheit des Sprachsignals und
- Typ einer Sprachsignal-Komprimierung
gemessen und gemäß einem vorbestimmten Auswertungsalgorithmus in Echtzeit oder Quasi-Echtzeit ausgewertet und in Abhängigkeit vom Auswertungsergebnis eine Einrichtung zur Beeinflussung der Sprachqualität in die Signalstrecke eingeschaltet oder nicht eingeschaltet wird.

2. Verfahren nach Anspruch 1,
**dadurch gekennzeichnet, dass**
die Messung und Auswertung des Parameters oder der Parameter unmittelbar nach Aufbau einer Verbindung anhand der ersten übertragenen Nutz-Sprachsignale ausgeführt wird.

3. Verfahren nach Anspruch 1 oder 2,
**dadurch gekennzeichnet, dass**
die Messung und Auswertung des Parameters oder der Parameter während des Bestehens einer Verbindung in vorbestimmten Zeitabständen wiederholt und der Schaltzustand der Einrichtung zur Beeinflussung der Sprachqualität in Abhängigkeit vom Auswertungsergebnis wahlweise geändert wird.

4. Verfahren nach einem der vorangehenden Ansprüche,
**dadurch gekennzeichnet, dass**
die beiden Parameter Laufzeit des Sprachsignals und Echodämpfung gemessen und aufgrund eines beide Parameter berücksichtigenden Auswertungsalgorithmus ausgewertet werden und als Einrichtung zur Beeinflussung der Sprachqualität ein Echokompensator eingesetzt wird.

5. Verfahren nach Anspruch 4,
**dadurch gekennzeichnet, dass**
neben den Parametern Laufzeit des Sprachsignals und Echodämpfung mindestens einer der Parameter Signal-Geräusch-Abstand oder Signal-Rausch-Abstand, Pegel des Sprachsignals, Pegel und Art eines Untergrundgeräusches, Klarheit des Sprachsignals und Typ einer Sprachsignal-Komprimierung gemessen und ausgewertet wird.

6. Verfahren nach Anspruch 4 oder 5,
**dadurch gekennzeichnet, dass**
bei einer Signallaufzeit im einfachen Signalweg im Bereich von 20 ms bis 400 ms, insbesondere 50 ms bis 1O0 ms, der Echokompensator nur dann eingeschaltet wird, wenn die Echodämpfung einen Wert unterschreitet, der im Bereich zwischen 6 dB und 40 dB, insbesondere 25 dB und 40 dB, vorprogrammiert ist.

7. Verfahren nach einem der vorangehenden Ansprüche,
**dadurch gekennzeichnet, dass**
der vorbestimmte Auswertungsalgorithmus mindestens eine Entscheidungsmatrix mit Schaltzuständen der Einrichtung zur Beeinflussung der Sprachqualität in Zuordnung zu Werten des Parameters oder der Parameter aufweist.

8. Anordnung zur Durchführung des Verfahrens nach einem der vorangehenden Ansprüche, mit einem ersten und zweiten Telekommunikations-Endgerät und einer zwischen diesen bestehenden Signalstrecke eines Telekommunikationsnetzes mit einer Vermittlungseinrichtung,
**gekennzeichnet durch**
mindestens eine Messeinrichtung zur Messung mindestens eines der Parameter Laufzeit des Sprachsignals, Echodämpfung, Signal-Geräusch-Abstand oder Signal-Rausch-Abstand, Pegel des Sprachsignals, Pegel und Art eines Untergrundgeräusches, Klarheit des Sprachsignals und Typ einer Sprachsignal-Komprimierung,
eine mit der Messeinrichtung eingangsseitig verbundene Auswertungseinrichtung zur Auswertung des gemessenen Parameters oder der gemessenen Parameter, in der der vorbestimmte Auswertungsalgorithmus gespeichert oder die mit einer den Auswertungsalgorithmus bereitstellenden Datenbasis verbindbar ist,
eine Einrichtung zur Beeinflussung der Sprachqualität und
eine eingangsseitig mit dem Ausgang der Auswertungseinrichtung Schalteinrichtung zum Ein- oder Ausschalten der Einrichtung zur Beeinflussung der Sprachqualität.

9. Anordnung nach Anspruch 8,
**gekennzeichnet durch**
eine Steuereinrichtung zur Steuerung der Messeinrichtung/Messeinrichtungen, der Auswertungs- und der Schalteinrichtung im Ansprechen auf einen Verbindungsaufbau zwischen dem ersten und zweiten Telekommunikations-Endgerät.

10. Anordnung nach Anspruch 9,
**dadurch gekennzeichnet, dass**
die Steuereinrichtung einen Zeitgeber zur periodischen Aktivierung der Messeinrichtung/Messeinrichtungen, der Auswertungs- und der Schalteinrichtung in vorbestimmten Zeitabständen nach einem Verbindungsaufbau aufweist.

11. Anordnung nach einem der Ansprüche 8 bis 10,
**dadurch gekennzeichnet, dass**
als Messeinrichtungen eine Laufzeit-Messeinrichtung zur Messung der Laufzeit des Sprachsignals und eine Echodämpfungs-Messeinrichtung zur Messung der Echodämpfung vorgesehen sind, in der Auswertungseinrichtung oder der Datenbasis ein Auswertungsalgorithmus zur zusammenhängenden Auswertung der Laufzeit und Echodämpfung implementiert ist und die Einrichtung zur Beeinflussung der Sprachqualität einen Echokompensator aufweist.

12. Anordnung nach Anspruch 11,
**dadurch gekennzeichnet, dass**
zusätzlich mindestens eine weitere Messeinrichtung zur Messung eines der Parameter Laufzeit des Sprachsignals und Echodämpfung mindestens einer der Parameter Signal-Geräusch-Abstand oder Signal-Rausch-Abstand, Pegel des Sprachsignals, Pegel und Art eines Untergrundgeräusches, Klarheit des Sprachsignals und Typ einer Sprachsignal-Komprimierung vorgesehen und in der Auswertungseinrichtung oder Datenbasis ein auch den oder die zusätzlichen Parameter berücksichtigender Auswertungsalgorithmus implementiert ist.

13. Anordnung nach einem der Ansprüche 8 bis 12,
**dadurch gekennzeichnet, dass**
die Messeinrichtung, wahlweise integriert mit der Auswertungseinrichtung, im wesentlichen als auf einem digitalen Signalprozessor implementierter Sprachdaten-Verarbeitungsalgorithmus ausgebildet ist.

14. Telekommunikationsanlage, insbesondere automatische Nebenstellenanlage, mit einer Anordnung nach einem der Ansprüche 8 bis 13.

15. Voice-over-IP-Gateway mit einer Anordnung nach einem der Ansprüche 8 bis 13.
